# EUROPEAN PATENT APPLICATION

(11) **EP 4 675 280 A1**
(43) Date of publication of application: **07.01.2026**
(21) Application number: 24763414.0
(22) Date of filing: 16.01.2024
(51) Int. Cl.: G01N 35/00, G01N 35/10

(54) **LIQUID STORAGE DEVICE**

(30) Priority: 27.02.2023 JP 2023028862
(71) Applicant: FUJIFILM Corporation, Tokyo 106-8620 (JP)
(72) Inventor: SIMIZU, Hitosi, Ashigarakami-gun, Kanagawa 258-8538 (JP)
(74) Representative: Dehns Germany Partnerschaft mbB
(86) International application number: PCT/JP2024/000973
(87) International publication number: WO 2024/180929

(57) **Abstract**

A liquid storage device includes a distribution unit that supplies a liquid to a nozzle; a heat retention tank having a heat insulating function that is connected to the distribution unit and stores the liquid; a pump that sucks the liquid to be replenished to the tank from an outside; a supply conduit that guides the liquid sucked by the pump to the heat retention tank; a temperature sensor that detects a temperature of the liquid passing through the supply conduit; a heating unit that heats the liquid passing through the supply conduit; and a processor that is configured to execute a process of, in a case where the liquid is replenished to the heat retention tank, heating the liquid sucked into the supply conduit by the pump to a temperature set in advance in the supply conduit and replenishing the liquid heated in the supply conduit to the heat retention tank by acquiring information related to the temperature from the temperature sensor and controlling the heating unit.

## Description

### BACKGROUND OF THE INVENTION

### 1. Field of the Invention

The present disclosure relates to a liquid storage device.

### 2. Description of the Related Art

An examination device (which is also referred to as an analysis apparatus) that quantitatively or qualitatively detects an examination target substance in a specimen is known. Many of such examination devices use an immunoassay principle, and examples thereof include a chemiluminescent enzyme immunological analysis apparatus and a fluorescence immunological measurement apparatus.

Such an examination device performs a detecting process of detecting an examination target substance in a specimen by detecting luminescence or fluorescence based on a label such as an enzyme label or a fluorescent label attached to the examination target substance in the specimen by using an immunoreaction. The examination using the immunoreaction includes a bound/free (BF) separation step of separating those bound by the immunoreaction from those not bound.

In such an examination device, for example, a specific biological component or a chemical substance contained in a biological specimen such as blood, serum, or urine is detected. In this way, in a case where a biological specimen is used as a specimen, it is necessary to keep a temperature of a liquid such as a reagent used for pretreatment or analysis of the specimen and a washing solution (BF separation solution) during BF separation constant.

JP2013-088164A discloses an analysis apparatus comprising a temperature control mechanism that controls a temperature of a washing solution supplied to a reaction container.

JP2008-241397A discloses an analysis apparatus comprising a heating block in a liquid feeding tube connecting a liquid feeding pump and an injection nozzle to heat the liquid within the liquid feeding tube, and configured to discharge a heated washing solution from the nozzle.

### SUMMARY OF THE INVENTION

JP2013-088164A describes that a temperature adjusting mechanism incorporates a heating member and a control unit, but does not describe details of temperature adjustment.

In the analysis apparatus of JP2008-241397A, in a case where a washing treatment is performed, first, the washing solution is fed from a holding bottle to the heating block (heating unit) by a liquid feeding pump, and then the washing solution is heated in the heating block until a certain temperature is reached, and then the washing solution is fed to a nozzle.

As in JP2008-241397A, since the washing solution is fed to the heating block and heated, in a case where the temperature of the washing solution fed to the heating block is low, it takes time corresponding to the heating in the heating block.

An object of the present disclosure is to provide a liquid storage device that stores a liquid to be supplied to a nozzle and that can shorten a settling time, which is a time from when supply of the liquid to a conduit connected to the nozzle is started to when the liquid heated to a temperature set in advance through a heating unit provided in the conduit is discharged from the nozzle, as compared with the related art.

A liquid storage device of the present disclosure comprising:
a distribution unit that supplies a liquid to a nozzle that discharges the liquid;
a heat retention tank having a heat insulating function that is connected to the distribution unit and stores the liquid in an amount sufficient for the nozzle to discharge the liquid a plurality of times;
a pump that sucks the liquid to be replenished to the heat retention tank from an outside;
a supply conduit that guides the liquid sucked by the pump to the heat retention tank;
a temperature sensor that is disposed on the supply conduit and detects a temperature of the liquid passing through the supply conduit;
a heating unit that is disposed on the supply conduit and heats the liquid passing through the supply conduit; and
a processor;
in which the processor is configured to, in a case where the liquid is replenished to the heat retention tank, execute a process of heating the liquid sucked into the supply conduit by the pump to a temperature set in advance in the supply conduit and replenishing the liquid heated in the supply conduit to the heat retention tank by acquiring information related to the temperature from the temperature sensor and controlling the heating unit.

It is preferable that the heat retention tank is not provided with a heating function.

It is preferable that the pump is a quantitative pump that sucks a fixed amount of the liquid in one operation, and the processor is configured to execute a process of controlling the heating unit according to the temperature of the liquid and the number of operations of the pump.

It is preferable that the liquid storage device of the present disclosure comprises a circulation conduit that returns the liquid to the pump from the heat retention tank via the distribution unit; and a valve that is disposed on an upstream side of the pump and switches between a circulation state in which the circulation conduit communicates with the pump to circulate the liquid from the circulation conduit to the heat retention tank through the supply conduit and a replenishment state in which the circulation conduit and the pump are not in communication with each other and the liquid for replenishment from the outside is replenished to the heat retention tank by the pump through the supply conduit.

It is preferable that the processor is configured to, in the circulation state, execute a process of intermittently operating the pump to intermittently circulate the liquid.

It is preferable that the supply conduit is composed of a resin tube except for a portion where the heating unit is disposed, and the portion where the heating unit is disposed is composed of a metal pipe.

It is preferable that the circulation conduit is composed of a resin tube.

It is preferable that the liquid storage device according to the present disclosure further comprises a liquid level sensor that detects a liquid level position of the liquid in the heat retention tank, and in which it is preferable that the processor is configured to, in a case where the liquid level position detected by the liquid level sensor is equal to or lower than a predetermined specified position, execute a process of replenishing the liquid for replenishment from the outside to the heat retention tank by the pump through the supply conduit.

The liquid storage device according to the present disclosure may further comprise, as the temperature sensor, a first temperature sensor that is disposed between the pump and the heating unit; and a second temperature sensor that is disposed in the heating unit, in which the processor may be configured to, in a case where a temperature difference between a temperature of the liquid acquired from the first temperature sensor and a target temperature set as a temperature of the liquid to be supplied to the heat retention tank is equal to or higher than a set temperature difference set in advance, execute feedforward control of adjusting an amount of energy to be applied to the heating unit based on the temperature of the liquid, and in a case where the temperature difference is less than the set temperature difference, execute feedback control of adjusting the amount of energy to be applied to the heating unit based on a temperature of the liquid acquired from the second temperature sensor.

The liquid storage device of the present disclosure may be disposed in an examination device that performs an examination using an immunoreaction, the examination including a step of performing BF separation after a detection target substance in a specimen is bound to a binding substance that specifically binds to the detection target substance in a reaction container, and the liquid storage device may store a BF separation solution for performing the BF separation as the liquid.

According to the technology of the present disclosure, in the liquid storage device that stores the liquid to be supplied to the nozzle, it is possible to shorten a settling time, which is a time from when supply of the liquid to a conduit connected to the nozzle is started to when the liquid heated to a temperature set in advance through a heating unit provided in the conduit is discharged from the nozzle, as compared with the related art.

### BRIEF DESCRIPTION OF THE DRAWINGS

Fig. 1 is a schematic view showing an overall configuration of a liquid discharge system including a liquid storage device of a first embodiment.
Fig. 2 is a schematic view showing an overall configuration of a liquid discharge system including a liquid storage device according to a second embodiment.

### DESCRIPTION OF THE PREFERRED EMBODIMENTS

Hereinafter, a liquid storage device according to an embodiment of the present disclosure will be described with reference to the drawings. Constituent elements indicated by the same reference numeral in the drawings mean the same constituent element.

### "First Embodiment"

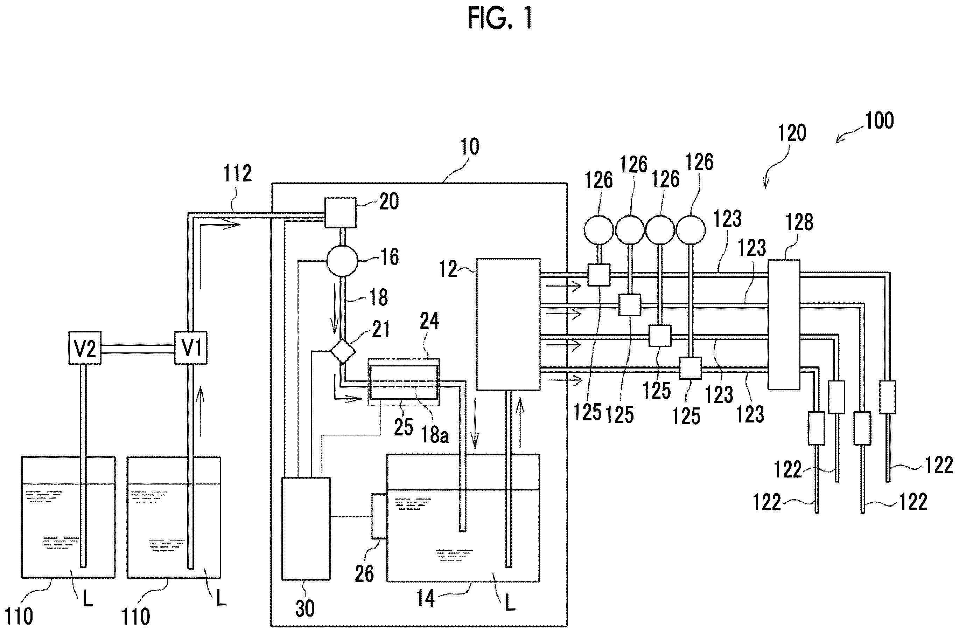

Fig. 1 is a schematic view showing an overall configuration of a liquid discharge system 100 comprising a liquid storage device 10 of a first embodiment. The liquid discharge system 100 comprises a liquid storage device 10, a preliminary tank 110, and a discharge unit 120. In the drawing, an arrow schematically indicates a flow of the liquid L.

The liquid discharge system 100 is disposed in, for example, an examination device that performs an examination using an immunoreaction. In such an examination device, a BF separation step of separating a bound substance and an unbound substance is performed after binding a detection target substance in a specimen to a binding substance that specifically binds to the detection target substance in a reaction container. The liquid discharge system 100 is used, for example, to discharge a BF separation solution (also referred to as a washing solution) in a case of carrying out a washing treatment in the BF separation step, into the reaction container.

The preliminary tank 110 stores the liquid L (for example, the BF separation solution) to be supplied to the heat retention tank 14 in the liquid storage device 10. The liquid discharge system 100 shown in Fig. 1 comprises two preliminary tanks 110. The number of the preliminary tanks 110 is not limited. A liquid level sensor (not shown) is provided outside each of the preliminary tanks 110, and in a case where the first preliminary tank 110 is empty, the first preliminary tank 110 is configured to switch the valves V1 and V2 so that the liquid L in the second preliminary tank 110 is used.

The discharge unit 120 includes a plurality of nozzles 122 that discharge the liquid L to the reaction container, a connection conduit 123, a valve 125, and a syringe pump 126. The connection conduit 123 connects a distribution unit 12 in the liquid storage device 10, which will be described later, and the nozzle 122 to each other, and supplies the heated liquid L stored in the liquid storage device 10 to the nozzle 122. The valve 125 and the syringe pump 126 are disposed in the middle of the connection conduit 123, and the valve 125 is opened and the syringe pump 126 is operated in a case where the liquid L is supplied to the nozzle 122, so that the liquid L is supplied to the nozzle 122.

The post-heater 128 is provided in the connection conduit 123 in front of the nozzle 122, and the heated liquid L supplied from the liquid storage device 10 is further heated by the post-heater 128 as necessary and is discharged from the nozzle 122.

The liquid storage device 10 stores the liquid L to be supplied to the nozzle 122 in a heated state. A liquid L having the same temperature as the target temperature (for example, 37°C) of the liquid L discharged from the nozzle 122 is stored, and the liquid L is supplied to the discharge unit 120 as necessary.

The liquid storage device 10 comprises a distribution unit 12, a heat retention tank 14, a pump 16, a supply conduit 18, a valve 20, a temperature sensor 21, a heating unit 24, and a processor 30.

The distribution unit 12 supplies the liquid L to the nozzle 122 that discharges the liquid L. The liquid L stored in the heat retention tank 14 described below is supplied to the nozzle 122 through the distribution unit 12.

The heat retention tank 14 is connected to the distribution unit 12. The heat retention tank 14 has a heat insulating function and stores the liquid L in an amount sufficient for the nozzle 122 to discharge the liquid L a plurality of times. The heat retention tank 14 is not provided with a heating function. In a case where the liquid L to be stored is the BF separation solution, in order to prevent the properties of the BF separation solution from being impaired, the material of the heat retention tank 14 is preferably a resin such as polytetrafluoroethylene (PTFE), polypropylene (PP), or polyethylene (PE). These are also preferable from the viewpoint of heat insulating properties.

The pump 16 sucks the liquid L to be replenished to the heat retention tank 14 from the outside. The pump 16 is a quantitative pump that sucks a fixed amount of the liquid L in one operation.

The supply conduit 18 guides the liquid L sucked by the pump 16 to the heat retention tank 14. It is preferable that the supply conduit 18 is composed of a resin tube except for a portion where the heating unit 24 is disposed. The use of the resin tube makes it easy to handle. In a case where the liquid L is a BF separation solution, a fluororesin is suitable as a material of the resin tube, and examples thereof include polytetrafluoroethylene (PTFE). A portion of the supply conduit 18, in which the heating unit 24 is disposed, is formed of a metal pipe 18a. As a material of the metal pipe, for example, stainless steel, particularly austenitic stainless steel having high corrosion resistance is suitable, and examples thereof include SUS316.

The valve 20 is disposed at a connection portion between one end of the supply conduit 18 and the other end of an external conduit 112 of which one end is connected to the preliminary tank 110. The valve 20 switches between a state in which the supply conduit 18 and the external conduit 112 communicate with each other and a state in which the supply conduit 18 and the external conduit 112 do not communicate with each other, so that the liquid L can be replenished from the preliminary tank 110 to the heat retention tank 14 via the supply conduit 18.

The temperature sensor 21 is disposed on the supply conduit 18 and detects the temperature of the liquid L passing through the supply conduit 18. The temperature sensor 21 is disposed between the pump 16 and the heating unit 24. The temperature sensor 21 outputs information related to the detected temperature of the liquid L to the processor 30. The information related to the temperature may be the temperature itself or a voltage value related to the temperature.

The heating unit 24 is disposed on the supply conduit 18 and heats the liquid L passing through the supply conduit 18. The heating unit 24 is provided with a heater 25, and the metal pipe 18a is heated by the heater 25.

The processor 30 controls the operation of the entire liquid storage device 10. In a case of replenishing the liquid L in the heat retention tank 14, the processor 30 acquires information related to the temperature from the temperature sensor 21 and controls the heating unit 24. Accordingly, the processor 30 is configured to execute a process of heating the liquid L, which is sucked into the supply conduit 18 by the pump 16, to a temperature set in advance in the supply conduit 18 and replenishing the liquid L, which has been heated in the supply conduit 18, into the heat retention tank 14.

The liquid storage device 10 comprises a liquid level sensor 26 that detects a liquid level position of the liquid L in the heat retention tank 14. The liquid level sensor 26 is, for example, a film-type capacitive liquid level sensor attached to an outer wall surface of the heat retention tank 14.

The liquid level sensor 26 outputs information related to the detected liquid level position to the processor 30. The processor 30 is configured to acquire the information related to the liquid level position from the liquid level sensor 26, switch the valve 20 to the replenishment state in a case where the liquid level position is equal to or lower than a predetermined specified position, and execute a process of replenishing the liquid L for replenishment from the outside (here, the preliminary tank 110) to the heat retention tank 14 through the supply conduit 18 by the pump 16.

The liquid storage device 10 according to the first embodiment is configured as described above. Here, a replenishment process of replenishing fresh liquid L from the preliminary tank 110 to the heat retention tank 14 in the liquid storage device 10 will be described.

In the liquid storage device 10, the liquid level sensor 26 detects an amount of the liquid in the heat retention tank 14. The processor 30 acquires the information related to the liquid level position acquired from the liquid level sensor 26, and switches the valve 20 to the replenishment state in which the replenishment of the liquid L is executable in a case where the liquid level position is equal to or lower than the predetermined specified position. Specifically, the external conduit 112 of which one end is connected to the preliminary tank 110 and the supply conduit 18 are made to communicate with each other, and the liquid L stored in the preliminary tank 110 is made to be capable of being supplied to the supply conduit 18.

The processor 30 operates the pump 16 to suction the liquid L stored in the preliminary tank 110 into the supply conduit 18 via the external conduit 112. The temperature of the liquid L in the supply conduit 18 is detected by the temperature sensor 21. The temperature sensor 21 detects the temperature of the fresh liquid L replenished from the outside through the supply conduit 18, and outputs the temperature to the processor 30. The processor 30 acquires information related to the temperature of the liquid L from the temperature sensor 21, adjusts the amount of energy applied to the heater 25 of the heating unit 24 based on a difference between the acquired temperature and the target temperature, and further adjusts the output of the heater 25. That is, the processor 30 performs feedforward control of controlling the heating unit 24 based on the information related to the temperature of the liquid L before being fed to the heating unit 24. In the heating unit 24, the heater 25 heats the metal pipe 18a, and the liquid L passing through the metal pipe 18a is heated.

In this way, the heated liquid L that has been heated through the supply conduit 18 is replenished to the heat retention tank 14. The target temperature is a temperature in a case of being supplied to the heat retention tank 14, and is the same as the target temperature (for example, 37°C) in a case of being discharged from the nozzle 122 described above.

The heat retention tank 14 has a heat insulating function and heat-retentively stores the heated liquid L. As described above, the heated liquid L stored in the heat retention tank 14 is supplied to the discharge unit 120. In the discharge unit 120, the liquid L is heated by the post-heater 128 to compensate for the temperature of the liquid L that is lowered while being fed through the conduit, and then discharged from the nozzle 122.

The liquid storage device 10 of the present embodiment comprises the heat retention tank 14 having a heat insulating function, and the heat retention tank 14 stores the heated liquid L. Therefore, the heated liquid L can be supplied to the discharge unit 120 comprising the nozzle 122. Therefore, the settling time, which is the time from when the supply of the liquid L from the heat retention tank 14 to the connection conduit 123 is started via the distribution unit 12 by the operation of the syringe pump 126 of the discharge unit 120 to when the liquid L heated to the target temperature set in advance is discharged from the nozzle 122 via the post-heater 128 provided in the connection conduit 123, can be shortened as compared with a case where the liquid L that has not been heated is directly supplied to the connection conduit 123 of the discharge unit 120 without the liquid storage device 10.

In addition, since the supply conduit 18 comprises the heating unit 24 that heats the liquid L, the heating efficiency is good. That is, the amount of the liquid L passing through the supply conduit 18 per unit time is smaller than the amount of the liquid L stored in the heat retention tank 14. Therefore, the liquid L in the supply conduit 18 has a smaller heat capacity than the liquid L in the heat retention tank 14. Therefore, the temperature of the liquid L can be increased in a shorter time by heating the liquid L in the supply conduit 18 than by heating the liquid L in the heat retention tank 14. In addition, since the time delay in the feedforward control of adjusting the amount of energy applied to the heating unit 24 (more specifically, the heater 25) based on the temperature detected in front of the heating unit 24 can also be suppressed, it is possible to perform temperature control with high accuracy.

It is also conceivable that the heat retention tank 14 is formed of a material having high thermal conductivity and is heated from the outside, but as described above, since the liquid L in the heat retention tank 14 has a large heat capacity, the time constant of temperature control is long, and stable control is difficult. On the other hand, by heating the liquid L in the supply conduit 18 having a small heat capacity, the time constant of temperature control can be shortened, and stable control can be performed. Therefore, since the liquid L controlled to the set temperature can be replenished in the heat retention tank 14, the temperature change of the liquid L in the heat retention tank 14 can be suppressed. In particular, in a case where the liquid L is a liquid such as the BF separation solution in which the properties of the liquid L are impaired due to excessive heating, there is a great advantage in that stable control can be performed.

In the liquid storage device 10 of the present embodiment, the heating function is not provided in the heat retention tank 14. As described above, it is difficult to stably control the heating of the liquid L in the heat retention tank 14. In addition, in a case where the liquid L is a solution such as a BF separation solution, an air layer is included in the heat retention tank 14, so that precipitation of a solute may occur and the properties of the solution may be impaired. In a case where the heating is performed in the supply conduit 18 (specifically, the metal pipe 18a) before replenishing the heat retention tank 14, since there is no air layer in the supply conduit 18, the precipitation of the solute does not occur, and the precipitation of the solute in the heat retention tank 14 can be suppressed.

In the above, the processor 30 controls the output of the heater 25 of the heating unit 24 based on the temperature of the liquid L detected by the temperature sensor 21. Further, in a case where the pump 16 is a quantitative pump, the processor 30 may be configured to control the amount of energy applied to the heater 25 of the heating unit 24 according to the number of operations of the pump 16 in addition to the temperature of the liquid L.

The processor 30 can further improve the temperature control accuracy by controlling the heating unit 24 in accordance with the amount of liquid L taken in from the outside in addition to the temperature of the liquid L.

The liquid storage device 10 of the present embodiment comprises a liquid level sensor 26 that detects a liquid level position of the liquid L in the heat retention tank 14. In a case where the liquid level position detected by the liquid level sensor 26 is equal to or lower than a predetermined specified position, the processor 30 is configured to operate the valve 20 to switch to the replenishment state and execute a process of replenishing the liquid L for replenishment from the outside to the heat retention tank 14 through the supply conduit 18 by the pump 16. Therefore, the amount of the liquid L stored in the heat retention tank 14 can be kept at a position equal to or higher than the specified position.

### "Second Embodiment"

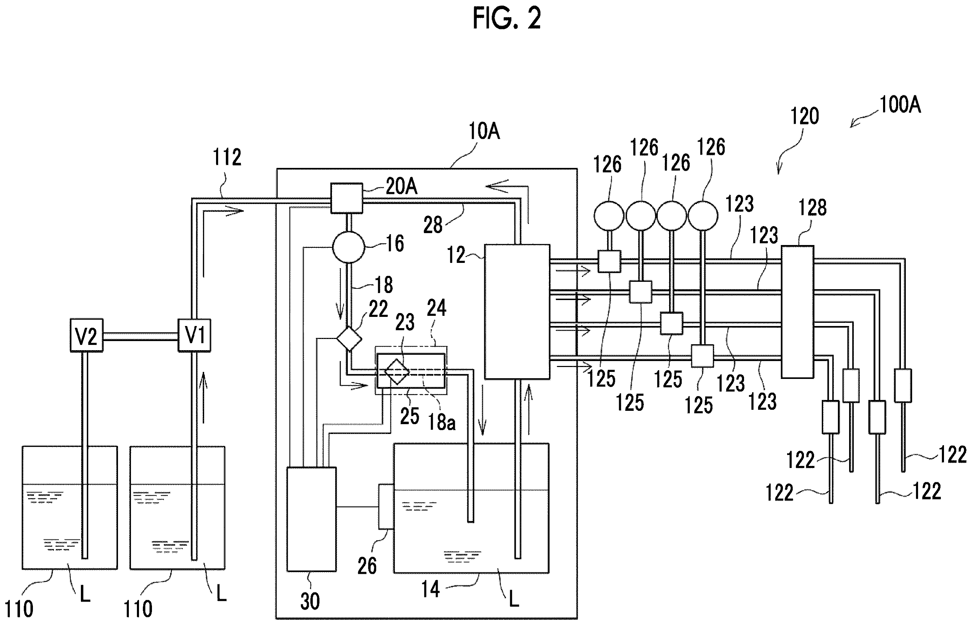

Fig. 2 is a schematic view showing an overall configuration of a liquid discharge system 100A comprising a liquid storage device 10A of a second embodiment. The liquid discharge system 100A comprises a liquid storage device 10A of the second embodiment instead of the liquid storage device 10 of the liquid discharge system 100 shown in Fig. 1. Hereinafter, a liquid storage device 10A of the second embodiment will be mainly described with respect to points different from the liquid storage device 10 of the first embodiment.

The liquid storage device 10A comprises a first temperature sensor 22 and a second temperature sensor 23 instead of the temperature sensor 21 in the liquid storage device 10. The first temperature sensor 22 and the second temperature sensor 23 are disposed on the supply conduit 18 and detect the temperature of the liquid passing through the supply conduit 18. The first temperature sensor 22 is disposed between the pump 16 and the heating unit 24, similarly to the temperature sensor 21 in the first embodiment. The second temperature sensor 23 is disposed in the heating unit 24. More specifically, the second temperature sensor 23 is disposed in a metal pipe 18a constituting a portion of the heating unit 24 of the supply conduit 18. The first temperature sensor 22 and the second temperature sensor 23 output information related to the detected temperature of the liquid L to the processor 30.

The processor 30, based on the information related to the temperature of the liquid L acquired from the first temperature sensor 22, in a case where a temperature difference between the temperature of the liquid L and a target temperature set as a temperature of the liquid to be supplied to the heat retention tank 14 is equal to or higher than a set temperature difference set in advance, performs feedforward control of adjusting the amount of energy applied to the heater 25 of the heating unit 24, based on the acquired information related to the temperature of the liquid L. In a case where the temperature difference between the temperature of the liquid L and the target temperature is less than the set temperature difference, the processor 30 performs feedback control of adjusting the amount of energy applied to the heater 25 of the heating unit 24 based on the information related to the temperature of the liquid L acquired from the second temperature sensor 23. Examples of the feedback control include proportional integral differential (PID) control.

The liquid storage device 10A comprises a circulation conduit 28 that returns the liquid L to the pump 16 from the heat retention tank 14 via the distribution unit 12. The circulation conduit 28 is preferably composed of a resin tube, similarly to the supply conduit 18. In a case where the liquid L is a BF separation solution, a fluororesin is suitable as a material of the resin tube, and examples thereof include polytetrafluoroethylene (PTFE).

A valve 20A is provided instead of the valve 20 of the liquid storage device 10. Similarly to the valve 20, the valve 20A is disposed at a connection portion between one end of the external conduit 112, of which the other end is connected to the preliminary tank 110, and one end of the supply conduit 18, and is disposed at a connection portion between the supply conduit 18 and the circulation conduit 28. The valve 20A is disposed on the upstream side of the pump 16 on the supply conduit 18. The valve 20A communicates the circulation conduit 28 with the supply conduit 18, and as a result, the circulation conduit 28 is communicated with the pump 16. The valve 20A switches between a circulation state in which the circulation conduit 28 communicates with the pump 16 to circulate the liquid L from the circulation conduit 28 to the heat retention tank 14 through the supply conduit 18 and a replenishment state in which the circulation conduit 28 and the pump 16 are not in communication with each other and the liquid L for replenishment from the outside is replenished to the heat retention tank 14 by the pump 16 through the supply conduit 18. The switching between the circulation state and the replenishment state corresponds to switching between a state in which the supply conduit 18 and the circulation conduit 28 communicate with each other and the supply conduit 18 and the external conduit 112 are not in communication with each other and a state in which the supply conduit 18 and the circulation conduit 28 are not in communication with each other and the supply conduit 18 and the external conduit 112 communicate with each other.

In the replenishment state, a replenishment process of replenishing the fresh liquid L from the preliminary tank 110 to the heat retention tank 14 is executed. On the other hand, in the circulation state, a circulation process is executed in which the liquid L is circulated such that the liquid L is continuously or intermittently returned from the heat retention tank 14 to the heat retention tank 14 through the distribution unit 12, the circulation conduit 28, the valve 20A, the supply conduit 18, and the heating unit 24.

In the liquid storage device 10A, the valve 20A is basically in the circulation state in which the circulation conduit 28 and the supply conduit 18 are connected to each other. The processor 30 acquires the information related to the liquid level position acquired from the liquid level sensor 26, and switches to the replenishment state in which the replenishment of the liquid L is executable by operating the valve 20A in a case where the liquid level position is equal to or lower than the predetermined specified position. The replenishment process itself is the same as the replenishment process in the case of the liquid storage device 10 according to the first embodiment.

In a case where the valve 20A is in the circulation state, the processor 30 operates the pump 16 and executes the circulation process of returning the liquid L of the heat retention tank 14 to the heat retention tank 14 through the distribution unit 12, the circulation conduit 28, the valve 20A, and the supply conduit 18.

In the circulation process, the temperature of the liquid L in the supply conduit 18 is detected by the first temperature sensor 22 and the second temperature sensor 23. The first temperature sensor 22 and the second temperature sensor 23 detect the temperature of the liquid L that passes through the supply conduit 18 through the circulation conduit 28, and output the temperature to the processor 30. The processor 30 acquires the information related to the temperature of the liquid L from the first temperature sensor 22, and in a case where a temperature difference between the acquired temperature and the target temperature is equal to or higher than a set temperature difference (for example, 5°C or higher) set in advance, adjusts the amount of energy applied to the heater 25 of the heating unit 24 based on the acquired temperature of the liquid L. On the other hand, in a case where the temperature difference between the acquired temperature of the liquid L and the target temperature is less than the set temperature, the processor 30 adjusts the amount of energy applied to the heater 25 of the heating unit 24 based on the temperature of the liquid L acquired from the second temperature sensor 23. In the heating unit 24, the heater 25 heats the metal pipe 18a, and the liquid L passing through the metal pipe 18a is heated.

Then, the heated liquid L heated in the heating unit 24 is replenished in the heat retention tank 14.

In the circulation state, the processor 30 may continuously operate the pump 16 to continuously circulate the liquid L, but it is preferable that the processor 30 intermittently operates the pump 16 to intermittently circulate the liquid L. "Continuously operate the pump 16" means a state in which the pump 16 continues to operate, and "intermittently operates the pump 16" means a state in which the pump 16 is operated while a time for temporarily stopping and suspending the operation of the pump 16 is interposed.

As described above, the liquid storage device 10A of the second embodiment comprises the circulation conduit 28 that returns the liquid L to the pump 16 from the heat retention tank 14 via the distribution unit 12. The liquid storage device 10A comprises a valve 20A that switches between a replenishment state in which the liquid L is replenished from the outside and a circulation state in which the liquid L in the heat retention tank 14 is circulated to be returned to the heat retention tank 14 through the distribution unit 12, the circulation conduit 28, the pump 16, and the supply conduit 18.

The heat retention tank 14 has a heat insulating function and can suppress a decrease in temperature of the heated liquid L. However, since the heat retention tank 14 does not have a heating function, a decrease in the temperature of the liquid L is unavoidable as time elapses. Even in this case, in a case where the liquid L is continuously or intermittently supplied to the discharge unit 120 and the liquid L heated with respect to the heat retention tank 14 is appropriately replenished, the temperature of the liquid L in the heat retention tank 14 is not significantly decreased. On the other hand, in a case where the supply of the heated liquid L to the heat retention tank 14 is not performed for a long time, the temperature of the liquid L stored in the heat retention tank 14 may be significantly lowered from the target temperature. In such a case, in the discharge unit 120, a large temperature increase is required for the supplied liquid L by the post-heater 128, and the effect of shortening the settling time is reduced. On the other hand, in a case where the time during which the liquid L is not supplied from the outside to the heat retention tank 14 is long, the liquid storage device 10A of the present embodiment can circulate the liquid L in the heat retention tank 14 to return the liquid L to the heat retention tank 14 through the distribution unit 12, the circulation conduit 28, the pump 16, and the supply conduit 18. Therefore, since the liquid L in the heat retention tank 14 can be circulated and heated in the heating unit 24 and returned to the heat retention tank 14, the decrease in the temperature of the liquid L in the heat retention tank 14 can be suppressed.

As described above, with the liquid storage device 10A of the second embodiment, since the temperature of the liquid L in the heat retention tank 14 can be kept constant, the effect of shortening the settling time can be stably obtained.

In a case where the processor 30 is configured to intermittently operate the pump 16 to intermittently circulate the liquid L, the load of the pump 16 can be reduced and the pump life can be extended, as compared with a case where the pump 16 is continuously operated without being suspended.

As described above, the liquid storage device 10A of the second embodiment comprises the first temperature sensor 22 and the second temperature sensor 23, and the processor 30 executes the feedforward control in a case where the temperature difference between the temperature of the liquid L acquired from the first temperature sensor 22 and the target temperature is equal to or higher than the set temperature difference, and executes the feedback control based on the temperature of the liquid L acquired from the second temperature sensor 23 in a case where the temperature difference is less than the set temperature difference. Accordingly, since the output of the heater 25 in the heating unit 24 can be accurately controlled, the temperature of the liquid L passing through the heating unit 24 can be accurately adjusted, and the liquid L heated to the target temperature can be returned to or replenished in the heat retention tank 14.

As described above, in a case where the liquid discharge systems 100 and 100A each comprising the liquid storage device 10 or 10A are disposed in the examination device that performs the examination using the immunoreaction, and the liquid L stored in the liquid storage device 10 and 10A is the BF separation solution, the settling time in a case of discharging the BF separation solution can be shortened as compared with the related art, and thus the time required for the BF separation step can be shortened. In addition, in a case of a configuration in which the heating is not performed in the heat retention tank 14, the precipitation of the solute of the BF separation solution can be suppressed, and the deterioration of the properties of the BF separation solution can be suppressed.

In the above-described embodiment, as a hardware structure of the processor, various processors shown below can be used. Various processors include a programmable logic device (PLD) that is capable of changing a circuit configuration after manufacturing, such as a field-programmable gate array (FPGA), and a dedicated electric circuit that is a processor having a circuit configuration dedicatedly designed for executing specific processing, such as an application specific integrated circuit (ASIC), in addition to a CPU that is a general-purpose processor configured to execute software (program) to function as various processing units.

The above-described processing may be executed by one of these various processors, or a combination of two or more processors of the same type or different types (for example, a combination of a plurality of FPGAs and a combination of a CPU and an FPGA). In addition, a plurality of processing units may be configured of one processor. As an example where a plurality of processing units are configured with one processor, there is a form in which a processor that realizes all functions of a system including a plurality of processing units into one integrated circuit (IC) chip is used, such as system on chip (SOC).

Furthermore, the hardware structure of the processors is, more specifically, an electric circuit (circuitry) in which circuit elements such as semiconductor elements are combined.

In regard to the above-described embodiments, the supplementary notes will be further disclosed as follows.

### (Supplementary Note 1)

A liquid storage device comprising:
a distribution unit that supplies a liquid to a nozzle that discharges the liquid;
a heat retention tank having a heat insulating function that is connected to the distribution unit and stores the liquid in an amount sufficient for the nozzle to discharge the liquid a plurality of times;
a pump that sucks the liquid to be replenished to the heat retention tank from an outside;
a supply conduit that guides the liquid sucked by the pump to the heat retention tank;
a temperature sensor that is disposed on the supply conduit and detects a temperature of the liquid passing through the supply conduit;
a heating unit that is disposed on the supply conduit and heats the liquid passing through the supply conduit; and
a processor;
in which in a case where the liquid is replenished to the heat retention tank, the processor is configured to execute a process of heating the liquid sucked into the supply conduit by the pump to a temperature set in advance in the supply conduit and replenishing the liquid heated in the supply conduit to the heat retention tank by acquiring information related to the temperature from the temperature sensor and controlling the heating unit.

### (Supplementary Note 2)

The liquid storage device according to Supplementary Note 1,
in which the heat retention tank is not provided with a heating function.

### (Supplementary Note 3)

The liquid storage device according to Supplementary Note 1 or Supplementary Note 2,
in which the pump is a quantitative pump that sucks a fixed amount of liquid in one operation, and
the processor is configured to execute a process of controlling the heating unit according to the temperature of the liquid and the number of operations of the pump.

### (Supplementary Note 4)

The liquid storage device according to any one of Supplementary Note 1 to Supplementary Note 3, further comprising:
a circulation conduit that returns the liquid to the pump from the heat retention tank via the distribution unit; and
a valve that is disposed on an upstream side of the pump and switches between a circulation state in which the circulation conduit communicates with the pump to circulate the liquid from the circulation conduit to the heat retention tank through the supply conduit and a replenishment state in which the circulation conduit and the pump are not in communication with each other and the liquid for replenishment from the outside is replenished to the heat retention tank by the pump through the supply conduit.

### (Supplementary Note 5)

The liquid storage device according to Supplementary Note 4,
the processor is configured to, in the circulation state, execute a process of intermittently operating the pump to intermittently circulate the liquid.

### (Supplementary Note 6)

The liquid storage device according to any one of Supplementary Note 1 to Supplementary Note 5,
in which the supply conduit is composed of a resin tube except for a portion where the heating unit is disposed, and the portion where the heating unit is disposed is composed of a metal pipe.

### (Supplementary Note 7)

The liquid storage device according to Supplementary Note 4 or Supplementary Note 5,
in which the circulation conduit is composed of a resin tube.

### (Supplementary Note 8)

The liquid storage device according to any one of Supplementary Note 1 to Supplementary Note 7, further comprising:
a liquid level sensor that detects a liquid level position of the liquid in the heat retention tank,
in which the processor is configured to, in a case where the liquid level position detected by the liquid level sensor is equal to or lower than a predetermined specified position, execute a process of replenishing the liquid for replenishment from the outside to the heat retention tank by the pump through the supply conduit.

### (Supplementary Note 9)

The liquid storage device according to any one of Supplementary Note 1 to Supplementary Note 8, further comprising, as the temperature sensor:
a first temperature sensor that is disposed between the pump and the heating unit; and
a second temperature sensor that is disposed in the heating unit,
in which the processor is configured to:
   in a case where a temperature difference between a temperature of the liquid acquired from the first temperature sensor and a target temperature set as a temperature of the liquid to be supplied to the heat retention tank is equal to or higher than a set temperature difference set in advance, execute feedforward control of adjusting an amount of energy to be applied to the heating unit based on the temperature of the liquid; and
   in a case where the temperature difference is less than the set temperature difference, execute feedback control of adjusting the amount of energy to be applied to the heating unit based on a temperature of the liquid acquired from the second temperature sensor.

### (Supplementary Note 10)

The liquid storage device according to any one of Supplementary Note 1 to Supplementary Note 9,
in which the liquid storage device is disposed in an examination device that performs an examination using an immunoreaction, the examination including a step of performing BF separation after a detection target substance in a specimen is bound to a binding substance that specifically binds to the detection target substance in a reaction container, and
the liquid storage device stores a BF separation solution for performing the BF separation as the liquid.

Further, the disclosure of JP2023-028862 filed on February 27, 2023 is incorporated herein by reference in its entirety. All documents, patent applications, and technical standards described in the present specification are incorporated in the present specification by reference to the same extent as in a case where each document, patent application, and technical standard are specifically and individually noted to be incorporated by reference.

### Explanation of References

10, 10A: liquid storage device
12: distribution unit
14: heat retention tank
16: pump
18: supply conduit
18a: metal pipe
20, 20A: valve
21: temperature sensor
22: first temperature sensor
23: second temperature sensor
24: heating unit
25: heater
26: liquid level sensor
28: circulation conduit
30: processor
100, 100A: liquid discharge system
110: preliminary tank
112: external conduit
120: discharge unit
122: nozzle
123: connection conduit
125: valve
126: syringe pump
128: post-heater
L: liquid
V1, V2: valve

## Claims

1. A liquid storage device comprising:
a distribution unit that supplies a liquid to a nozzle that discharges the liquid;
a heat retention tank having a heat insulating function that is connected to the distribution unit and stores the liquid in an amount sufficient for the nozzle to discharge the liquid a plurality of times;
a pump that sucks the liquid to be replenished to the heat retention tank from an outside;
a supply conduit that guides the liquid sucked by the pump to the heat retention tank;
a temperature sensor that is disposed on the supply conduit and detects a temperature of the liquid passing through the supply conduit;
a heating unit that is disposed on the supply conduit and heats the liquid passing through the supply conduit; and
a processor;
wherein the processor is configured to, in a case where the liquid is replenished to the heat retention tank, execute a process of heating the liquid sucked into the supply conduit by the pump to a temperature set in advance in the supply conduit and replenishing the liquid heated in the supply conduit to the heat retention tank by acquiring information related to the temperature from the temperature sensor and controlling the heating unit.

2. The liquid storage device according to claim 1,
wherein the heat retention tank is not provided with a heating function.

3. The liquid storage device according to claim 1,
wherein the pump is a quantitative pump that sucks a fixed amount of the liquid in one operation, and
the processor is configured to execute a process of controlling the heating unit according to the temperature of the liquid and the number of operations of the pump.

4. The liquid storage device according to claim 1, further comprising:
a circulation conduit that returns the liquid to the pump from the heat retention tank via the distribution unit; and
a valve that is disposed on an upstream side of the pump and switches between a circulation state in which the circulation conduit communicates with the pump to circulate the liquid from the circulation conduit to the heat retention tank through the supply conduit and a replenishment state in which the circulation conduit and the pump are not in communication with each other and the liquid for replenishment from the outside is replenished to the heat retention tank by the pump through the supply conduit.

5. The liquid storage device according to claim 4,
wherein the processor is configured to, in the circulation state, execute a process of intermittently operating the pump to intermittently circulate the liquid.

6. The liquid storage device according to claim 1,
wherein the supply conduit is composed of a resin tube except for a portion where the heating unit is disposed, and the portion where the heating unit is disposed is composed of a metal pipe.

7. The liquid storage device according to claim 4,
wherein the circulation conduit is composed of a resin tube.

8. The liquid storage device according to claim 1, further comprising:
a liquid level sensor that detects a liquid level position of the liquid in the heat retention tank,
wherein the processor is configured to, in a case where the liquid level position detected by the liquid level sensor is equal to or lower than a predetermined specified position, execute a process of replenishing the liquid for replenishment from the outside to the heat retention tank by the pump through the supply conduit.

9. The liquid storage device according to claim 1, further comprising, as the temperature sensor:
a first temperature sensor that is disposed between the pump and the heating unit; and
a second temperature sensor that is disposed in the heating unit,
wherein the processor is configured to:
in a case where a temperature difference between a temperature of the liquid acquired from the first temperature sensor and a target temperature set as a temperature of the liquid to be supplied to the heat retention tank is equal to or higher than a set temperature difference set in advance, execute feedforward control of adjusting an amount of energy to be applied to the heating unit based on the temperature of the liquid; and
in a case where the temperature difference is less than the set temperature difference, execute feedback control of adjusting the amount of energy to be applied to the heating unit based on a temperature of the liquid acquired from the second temperature sensor.

10. The liquid storage device according to any one of claims 1 to 9,
wherein the liquid storage device is disposed in an examination device that performs an examination using an immunoreaction, the examination including a step of performing BF separation after a detection target substance in a specimen is bound to a binding substance that specifically binds to the detection target substance in a reaction container, and
the liquid storage device stores a BF separation solution for performing the BF separation as the liquid.
